(19) Europäisches Patentamt
European Patent Office
Office européen des brevets

(11) **EP 3 877 205 B1**

(12) **EUROPÄISCHE PATENTSCHRIFT**

(45) Veröffentlichungstag und Bekanntmachung des Hinweises auf die Patenterteilung:
**20.09.2023   Patentblatt 2023/38**

(21) Anmeldenummer: **19821022.1**

(22) Anmeldetag: **28.11.2019**

(51) Internationale Patentklassifikation (IPC):
*B60L 15/20* (2006.01)     *B60L 3/12* (2006.01)
*G01R 31/00* (2006.01)     *B60T 13/66* (2006.01)
*B60T 17/22* (2006.01)

(52) Gemeinsame Patentklassifikation (CPC):
**B60T 17/228; B60L 3/12; B60L 15/009;**
**B60T 13/662; B60T 13/665;** B60L 2200/26;
B60L 2240/427; B60L 2240/429; Y02T 10/64;
Y02T 10/72

(86) Internationale Anmeldenummer:
**PCT/EP2019/082823**

(87) Internationale Veröffentlichungsnummer:
**WO 2020/135966 (02.07.2020 Gazette 2020/27)**

(54) **FAHRZEUG**

VEHICLE

VÉHICULE

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorität: **28.12.2018   DE 102018251776**

(43) Veröffentlichungstag der Anmeldung:
**15.09.2021   Patentblatt 2021/37**

(73) Patentinhaber: **Siemens Mobility GmbH**
**81739 München (DE)**

(72) Erfinder:
• **AMLER, Gerald**
**90475 Nürnberg (DE)**

• **KLUTH, Wolfgang**
**90518 Altdorf (DE)**
• **REINICKE, Stefan**
**85304 Ilmmünster (DE)**
• **SCHIEFER, Dieter**
**91085 Weisendorf (DE)**

(74) Vertreter: **Siemens Patent Attorneys**
**Postfach 22 16 34**
**80506 München (DE)**

(56) Entgegenhaltungen:
**WO-A1-2016/134964       WO-A1-2017/093224**
**DE-A1-102014 217 431**

**Beschreibung**

Die Erfindung bezieht sich auf ein Fahrzeug, insbesondere Schienenfahrzeug, mit zumindest einem Antriebsmotor und einer Bremssteuereinrichtung.

Ein solches Fahrzeug ist aus der internationalen Patentanmeldung WO 2016/134964 A1 bekannt. Bei dem vorbekannten Fahrzeug ist zusätzlich zu einer Antriebssteuereinrichtung eine Überwachungseinrichtung vorhanden, die unabhängig von der Antriebssteuereinrichtung arbeitet und den Antrieb abschaltet, wenn eine Antriebsausschaltbedingung erfüllt ist und gleichzeitig ein aktiver Antriebsbetrieb des Antriebs festgestellt wird. Der Antriebsbetrieb wird durch Messen und Auswerten eines Gleichstroms in einem Gleichstromzwischenkreis eines dem Antrieb vorgeordneten Stromrichters festgestellt.

Die Druckschrift DE 10 2014 217 431 A1 beschreibt ein Schienenfahrzeug mit einer Vorrichtung, die eine Überwachung eines elektrischen Netzwerks des Schienenfahrzeugs auch im abgetrennten Zustand einer elektrischen Maschine ermöglicht.

Die Druckschrift WO 2017/093224 A1 offenbart ein Schienenfahrzeug mit einer elektropneumatischen Bremse.

Der Erfindung liegt die Aufgabe zugrunde, ein Fahrzeug der oben bezeichneten Art hinsichtlich der Arbeitsweise des Bremssystems weiter zu verbessern.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Ein wesentlicher Vorteil des erfindungsgemäßen Fahrzeugs ist darin zu sehen, dass im Unterschied zu dem eingangs genannten Fahrzeug zur Ermittlung der Arbeitsweise des Antriebsmotors unmittelbar der durch den Antriebsmotor fließende Antriebsstrom und die an dem Antriebsmotor anliegende Antriebsspannung gemessen werden und nicht mittelbare Messgrößen, die sich lediglich auf einen vorgelagerten Gleichstromzwischenkreis beziehen und daher nur mittelbar Aufschluss über das tatsächliche Verhalten des Antriebs geben. Etwaige Fehler innerhalb des Stromrichters können somit keinen Einfluss auf die ermittelte Betriebsangabe haben, und die Vertrauenswürdigkeit der mit den Messwerten ermittelten, vorzugsweise berechneten, Betriebsangabe ist besonders groß.

Ein weiterer wesentlicher Vorteil des erfindungsgemäßen Fahrzeugs besteht darin, dass eine besonders niederinduktive Anordnung der Komponenten - insbesondere mit Blick auf einen dem Antriebsmotor vorgeordneten Stromrichter - möglich ist, da Stromsensoren und Spannungssensoren nicht im Gleichspannungszwischenkreis des Stromrichters integriert werden müssen, sondern diesem nachgeordnet werden können.

Zur Ansteuerung des Antriebsmotors ist vorzugsweise eine mit dem Antriebsmotor, vorzugsweise über einen vorgeordneten Stromrichter, in Verbindung stehende Antriebssteuereinrichtung vorhanden. Bei Vorliegen eines Bremsbefehls, insbesondere eines Schnellbremsbefehls, steuert die Antriebssteuereinrichtung den Antriebsmotor, beispielsweise über einen Stromrichter, vorzugsweise derart an, dass der Antriebsmotor im Bremsbetrieb arbeitet und eine elektrodynamische Bremse bildet. Die von der Überwachungseinrichtung erzeugte Betriebsangabe bildet damit im Bremsbetrieb eine Bremsangabe des Antriebsmotors und damit eine Bremsangabe der durch diesen gebildeten elektrodynamischen Bremse.

Das Vorzeichen der Bremsangabe kann beispielsweise anzeigen, ob sich der Antriebsmotor tatsächlich im Bremsbetrieb befindet oder - im Falle eines Bremsbefehls, insbesondere Schnellbremsbefehls - in fehlerhafter Weise im Antriebsbetrieb befindet.

Vorteilhaft ist es, wenn das Fahrzeug eine reibungsbasierte Bremse aufweist und die Bremssteuereinrichtung zum Ansteuern der reibungsbasierten Bremse geeignet ist. Die Bremssteuereinrichtung ist vorzugsweise dazu ausgebildet, die reibungsbasierte Bremse unter Berücksichtigung der Bremsangabe der Überwachungseinrichtung ansteuern. Bei einer solchen Ausgestaltung kann ein Bremsen des Fahrzeugs in zuverlässiger Weise sowohl unter Heranziehung der reibungsbasierten Bremse als auch unter Berücksichtigung der jeweiligen Bremswirkung des Antriebsmotors gesteuert werden. Beispielsweise können im Falle einer Notsituation bzw. bei Vorliegen eines Schnellbremsbefehls sowohl der Antriebsmotor als elektrodynamische Bremse als auch die reibungsbasierte Bremse zum Bremsen des Fahrzeugs eingesetzt werden.

Die Bremssteuereinrichtung ist vorzugsweise dazu ausgebildet, die erforderliche Bremswirkung der reibungsbasierten Bremse durch Differenzbildung zwischen einem vorgegebenen Sollbremswert und der Bremsangabe der Überwachungseinrichtung zu ermitteln und ein Steuersignal für die reibungsbasierte Bremse anhand der ermittelten erforderlichen Bremswirkung der reibungsbasierten Bremse zu erzeugen. Die reibungsbasierte Bremse ist vorzugsweise eine elektropneumatische Bremse.

Der Sollbremswert wird vorzugsweise von der Bremssteuereinrichtung ermittelt in Abhängigkeit von der Drehzahl eines mit der reibungsbasierten Bremse zu bremsenden Radsatzes, der Geschwindigkeit des Fahrzeugs und/oder der Masse des Fahrzeugs.

Die reibungsbasierte Bremse ist vorzugsweise stufenfrei ansteuerbar und/oder erzeugt Bremskraft vorzugsweise stufenfrei. Eine stufenfrei arbeitende reibungsbasierte Bremse ermöglicht ein optimales Einstellen des Sollbremswerts, so dass beispielsweise im Falle eines Schnellbremsbefehls ein minimaler Bremsweg erreicht und ein Überbremsen einzelner oder mehrerer Radsätze des Fahrzeugs verhindert wird.

Der zumindest eine Antriebsmotor ist vorzugsweise ein zwei- oder mehrphasiger Antriebsmotor.

Die Überwachungseinrichtung umfasst pro Phase vorzugsweise einen Stromsensor zur Messung des durch den Antriebsmotor fließenden Phasenstroms unter Bildung eines Strommesswerts und pro Phase einen Spannungssensor zur Messung einer an dem Antriebsmotor anliegende Phasenspannung unter Bildung eines Spannungsmesswerts.

Vorteilhaft ist es, wenn der zumindest eine Antriebsmotor ein dreiphasiger Antriebsmotor ist und die Überwachungseinrichtung drei Stromsensoren zur Messung dreier Strommesswerte und drei Spannungssensoren zur Messung dreier Spannungsmesswerte umfasst.

Besonders vorteilhaft ist es, wenn die Überwachungseinrichtung die Strommesswerte unter Bildung einer Stromsumme und/oder die Spannungsmesswerte unter Bildung einer Spannungssumme aufsummiert.

Bei der letztgenannten Ausgestaltung erzeugt die Überwachungseinrichtung vorzugsweise ein Fehlersignal, wenn der Betrag der Stromsumme einen strombezogenen Schwellwert und/oder der Betrag der Spannungssumme einen spannungsbezogenen Schwellwert überschreitet.

Die Bremssteuereinrichtung ist bevorzugt dazu ausgebildet, im Bremsbetrieb des Fahrzeugs und Vorliegen des Fehlersignals die reibungsbasierte Bremse ohne Berücksichtigung der Bremsangabe anzusteuern, also so, als wäre der Antriebsmotor bremsmäßig inaktiv.

Auch ist es vorteilhaft, wenn die Überwachungseinrichtung dazu ausgebildet ist, im Bremsbetrieb, insbesondere bei Vorliegen eines Schnellbremsbefehls, den Antriebsstrom abzuschalten, wenn der durch den Antriebsmotor fließende Antriebsstrom und die an dem Antriebsmotor anliegende Antriebsspannung einen Antriebsbetrieb des Antriebs anzeigen. Ein Antriebsbetrieb kann beispielsweise durch ein anderes Vorzeichen in der Bremsangabe der Überwachungseinrichtung angezeigt werden als der Bremsbetrieb.

Das Fahrzeug weist bevorzugt außerdem eine Antriebssteuereinrichtung und einen der Antriebssteuereinrichtung nachgeordneten und von dieser angesteuerten Stromrichter auf, der den Antriebsmotor im Antriebsbetrieb mit Antriebsenergie versorgt und im Bremsbetrieb des Antriebsmotors Bremsenergie aus dem Antriebsmotor entnimmt.

Zwischen einer Energieversorgung und dem Stromrichter ist vorzugsweise ein Schalter angeordnet, der im eingeschalteten Zustand die Energieversorgung und den Stromrichter verbindet und im ausgeschalteten Zustand voneinander trennt. Die Überwachungseinrichtung schaltet den Schalter vorzugsweise aus, wenn im Bremsbetrieb des Fahrzeugs das Fehlersignal vorliegt und/oder bei Vorliegen eines Schnellbremsbefehls die Messwerte einen aktiven Antriebsbetrieb des Antriebsmotors anzeigen.

Die Bremssteuereinrichtung steht vorzugsweise mit der Antriebssteuereinrichtung in Verbindung und verarbeitet vorzugsweise eine von dieser ermittelte Bremsangabe zusätzlich zur Bremsangabe der Überwachungseinrichtung.

Die Erfindung bezieht sich darüber hinaus auf ein Verfahren zum Bremsen eines Fahrzeugs, insbesondere Schienenfahrzeugs, das zumindest einen Antriebsmotor und zumindest eine Bremssteuereinrichtung aufweist.

Erfindungsgemäß ist vorgesehen, dass im Bremsbetrieb des Fahrzeugs zumindest ein durch den Antriebsmotor fließender Antriebsstrom und zumindest eine an dem Antriebsmotor anliegende Antriebsspannung unter Bildung von Messwerten gemessen werden und anhand der Messwerte eine die Arbeitsweise des Antriebsmotors angebende Betriebsangabe, insbesondere in Form einer die Bremswirkung des Antriebsmotors angebenden Bremsangabe, erzeugt wird.

Bezüglich der Vorteile des erfindungsgemäßen Verfahrens sei auf die obigen Ausführungen im Zusammenhang mit dem erfindungsgemäßen Fahrzeug verwiesen.

Vorzugsweise wird unter Berücksichtigung der Bremsangabe eine reibungsbasierte Bremse angesteuert.

Die erforderliche Bremswirkung der reibungsbasierten Bremse wird vorzugsweise durch Differenzbildung zwischen einem vorgegebenen Sollbremswert und der Bremsangabe ermittelt. Die reibungsbasierte Bremse ist vorzugsweise eine elektropneumatische Bremse, die stufenfrei ansteuerbar ist und/oder mit der stufenfreien Bremskraft erzeugt wird.

Der Antriebsmotor wird vorzugsweise mit einer Antriebssteuereinrichtung angesteuert, die bei Vorliegen eines Bremsbefehls, insbesondere eines Schnellbremsbefehls, den Antriebsmotor, beispielsweise über einen Stromrichter, derart ansteuert, dass der Antriebsmotor im Bremsbetrieb arbeitet und eine elektrodynamische Bremse bildet.

Die Erfindung wird nachfolgend anhand von Ausführungsbeispielen näher erläutert; dabei zeigen beispielhaft

Figur 1      Bestandteile eines Ausführungsbeispiels für ein erfindungsgemäßes Schienenfahrzeug, das mit einer elektrodynamischen Bremse und einer reibungsbasierten Bremse ausgestattet ist,

Figur 2      Bestandteile eines Ausführungsbeispiels für ein erfindungsgemäßes Schienenfahrzeug, bei dem zusätzlich ein von einer Überwachungseinrichtung abschaltbarer Schalter zum Abschalten der Energieversorgung des Stromrichters vorhanden ist,

Figur 3    Bestandteile eines Ausführungsbeispiels für ein erfindungsgemäßes Schienenfahrzeug, bei dem eine Antriebssteuereinrichtung bei Vorliegen eines Schnellbremsbefehls eine die Bremswirkung des Antriebsmotors angebende Bremsangabe an eine die reibungsbasierte Bremse ansteuernde Bremssteuereinrichtung übermittelt, und

Figur 4    Bestandteile eines Ausführungsbeispiels für ein erfindungsgemäßes Schienenfahrzeug, wobei der Antriebsmotor im Unterschied zu den Ausführungsbeispielen gemäß den Figuren 1 bis 3 einphasig und nicht dreiphasig ausgebildet ist.

In den Figuren werden der Übersicht halber für identische oder vergleichbare Komponenten stets dieselben Bezugszeichen verwendet.

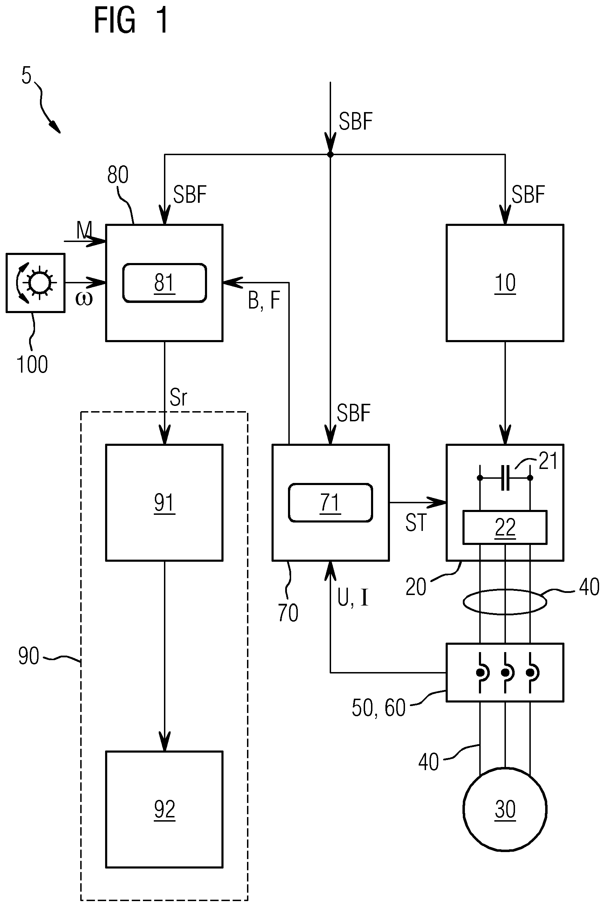

Die Figur 1 zeigt Bestandteile eines Schienenfahrzeugs 5 in einer schematischen Darstellung. Man erkennt eine Antriebssteuereinrichtung 10, die über einen Stromrichter 20 mit einem Antriebsmotor 30 des Schienenfahrzeugs 5 in Verbindung steht.

Die Verbindung zwischen dem Stromrichter 20 und dem Antriebsmotor 30 umfasst Versorgungsleitungen, die in der Figur 1 mit dem Bezugszeichen 40 gekennzeichnet sind. Der Antriebsmotor 30 ist bei dem Ausführungsbeispiel gemäß Figur 1 dreiphasig ausgestaltet und demgemäß über drei Versorgungsleitungen 40 mit dem Stromrichter 20 verbunden.

Der Stromrichter 20 weist einen Gleichspannungszwischenkreis 21 auf, dem ausgangsseitig ein Wechselrichter 22 nachgeordnet ist. Der Wechselrichter 22 erzeugt ausgangsseitig dreiphasig den Ansteuerstrom und die Ansteuerspannung für den Antriebsmotor 30 und speist diese in die Versorgungsleitungen 40 ein.

Die eingangsseitige Speisung bzw. die eingangsseitige Energieversorgung des Gleichspannungszwischenkreises 21 ist in der Figur 1 nicht näher dargestellt, sie kann über einen nicht gezeigten Gleichrichter im Falle einer Wechselspannungsversorgung des Stromrichters 20 oder unmittelbar durch eine Gleichspannungsspeisung erfolgen.

An die Versorgungsleitungen 40 sind Stromsensoren 50 und Spannungssensoren 60 angeschlossen, mit denen die Überwachungseinrichtung 70 Strommesswerte I und Spannungsmesswerte U misst. Die Überwachungseinrichtung 70 steht ausgangsseitig mit einer Bremssteuereinrichtung 80 in Verbindung, die zur Ansteuerung einer reibungsbasierten, vorzugsweise elektropneumatischen, Bremse 90 des Schienenfahrzeugs 5 ausgebildet ist. Die Stromsensoren 50 und Spannungssensoren 60 können Bestandteile der Überwachungseinrichtung 70 sein.

Die reibungsbasierte Bremse 90 umfasst eine Steuereinheit 91, die vorzugsweise elektropneumatisch ausgestaltet ist bzw. eine elektropneumatische Steuereinheit ist, und eine nachgeschaltete Bremsmechanik 92, die auf einen nicht weiter gezeigten Radsatz des Schienenfahrzeugs 5 einwirkt.

Eingangsseitig steht die Bremssteuereinrichtung 80 darüber hinaus mit einem Drehzahlsensor 100 in Verbindung, der die jeweilige Drehzahl $\omega$ des von der reibungsbasierten Bremse 90 zu bremsenden Radsatzes oder eines anderen Radsatzes des Schienenfahrzeugs 5 misst und einen entsprechenden Drehzahlwert in die Bremssteuereinrichtung 80 einspeist.

Für den Fall, dass ein Schnellbremsbefehl SBF vorliegt, werden die in der Figur 1 gezeigten Komponenten des Schienenfahrzeugs 5 vorzugsweise wie folgt betrieben:
Bei Vorliegen des Schnellbremsbefehls SBF wird die Antriebssteuereinrichtung 10 den Stromrichter 20 derart ansteuern, dass der Antriebsmotor 30 im Bremsbetrieb arbeitet und eine elektrodynamische Bremse bildet. Die durch den Antriebsmotor 30 fließenden Antriebsströme und die an dem Antriebsmotor 30 anliegenden Antriebsspannungen werden von der Überwachungseinrichtung 70 mit den Stromsensoren 50 und den Spannungssensoren 60 unter Bildung der Strommesswerte I und der Spannungsmesswerte U gemessen und ausgewertet.

Die Überwachungseinrichtung 70 weist vorzugsweise eine Recheneinrichtung 71 auf, die geeignet ist, anhand der Strommesswerte I und der Spannungsmesswerte U eine Bremsangabe B zu berechnen, die die jeweilige Bremswirkung des Antriebsmotors 30 angibt. Die Bremsangabe B wird zu der nachgeordneten Bremssteuereinrichtung 80 übermittelt.

Die Bremssteuereinrichtung 80 weist beispielsweise eine Recheneinrichtung 81 auf, die derart ausgebildet ist, dass sie prüft, ob die durch die Bremsangabe B der Überwachungseinrichtung 70 quantifizierte Bremswirkung des Antriebsmotors 30 ausreicht oder nicht. Ist dies nicht der Fall, so errechnet die Bremssteuereinrichtung 80 durch Differenzbildung zwischen einem vorgegebenen Sollbremswert Bsoll und der jeweiligen Bremsangabe B der Überwachungseinrichtung 70 die erforderliche zusätzliche Bremswirkung Bz, die die reibungsbasierte Bremse 90 zusätzlich erzeugen muss, um das Schienenfahrzeug 5 bzw. den zu bremsenden Radsatz mit dem vorgegebenen Sollbremswert Bsoll zu bremsen:

$$\mathtt{Bz = Bsoll - B}$$

Ein die erforderliche zusätzliche Bremswirkung Bz angebendes Steuersignal für die reibungsbasierte Bremse 90 ist in der Figur 1 mit dem Bezugzeichen Sr dargestellt. Bei Vorliegen des Steuersignals Sr wird die elektropneumatische Steuereinheit 91 die pneumatisch arbeitende Bremsmechanik 92 der reibungsbasierten Bremse 90 entsprechend ansteuern, so dass der zu bremsende Radsatz die erforderliche zusätzliche Bremswirkung Bz, die der Antriebsmotor 30 nicht leistet, ersatzweise erzeugt.

Die reibungsbasierte Bremse 90 bzw. deren elektropneumatische Steuereinheit 91 sind vorzugsweise derart ausgebildet, dass die reibungsbasierte Bremse 90 kontinuierlich bzw. stufenlos arbeiten kann und stufenlos Bremswirkung auf den zu bremsenden Radsatz ausüben kann.

Zur Ermittlung des Sollbremswerts Bsoll kann die Bremssteuereinrichtung 80 ein Lastsignal M heranziehen, das das jeweilige Gewicht bzw. die jeweilige Masse des Schienenfahrzeugs 5 quantifiziert. Der Sollbremswert Bsoll wird in einem solchen Fall also vorzugsweise unter Heranziehung der Drehzahl ω des Drehzahlsensors 100 und des Lastsignals M ermittelt.

Die Überwachungseinrichtung 70 bzw. deren Recheneinrichtung 71 ist vorzugsweise darüber hinaus derart ausgestaltet, dass sie die Strommesswerte I und die Spannungsmesswerte U unter Bildung einer Stromsumme Isum sowie einer Spannungssumme Usum aufsummiert. Die Überwachungseinrichtung 70 erzeugt vorzugsweise ein Fehlersignal F, wenn der Betrag der Stromsumme Isum einen strombezogenen Schwellwert Imax und/oder der Betrag der Spannungssumme Usum einen spannungsbezogenen Schwellwert Umax überschreitet:

$$|I_{sum}| = |\sum_{i=1}^{3} I_i| > I_{max} \Rightarrow \text{Erzeugung des Fehlersignals F}$$

$$|U_{sum}| = |\sum_{i=1}^{3} U_i| > U_{max} \Rightarrow \text{Erzeugung des Fehlersignals F}$$

wobei Ii (i=1,...,3) die Phasenströme in den drei Versorgungsleitungen 40 und Ui die Phasenspannungen an den drei Versorgungsleitungen 40 bezeichnen.

Liegt ein solches Fehlersignal F seitens der Überwachungseinrichtung 70 vor, so wird die Bremssteuereinrichtung 80 vorzugsweise den Bremsbetrieb des Schienenfahrzeugs 5 bzw. die Ansteuerung der reibungsbasierten Bremse 90 derart durchführen, als wäre der Antriebsmotor 30 bremsmäßig inaktiv.

Darüber hinaus ist es vorteilhaft, wenn die Überwachungseinrichtung 70 die Strommesswerte I und die Spannungsmesswerte U - insbesondere unter Berücksichtigung der jeweiligen Vorzeichen von Strom und Spannung - dahingehend auswertet, ob der Antriebsmotor 30 im Falle eines Schnellbremsbefehls SBF tatsächlich als elektrodynamische Bremse arbeitet, und nicht aufgrund eines Fehlers weiterhin angetrieben wird. Stellt die Überwachungseinrichtung 70 anhand der Strommesswerte I und der Spannungsmesswerte U fest, dass der Antriebsmotor 30 trotz Vorliegen des Schnellbremsbefehls SBF als Antrieb arbeitet und nicht als elektrische Bremse, so wird die Überwachungseinrichtung 70 vorzugsweise den Antriebsmotor 30 deaktivieren, indem sie den Stromrichter 20 mittels eines Abschaltsignals ST abschaltet und somit eine Speisung des Antriebsmotors 30 unterbindet.

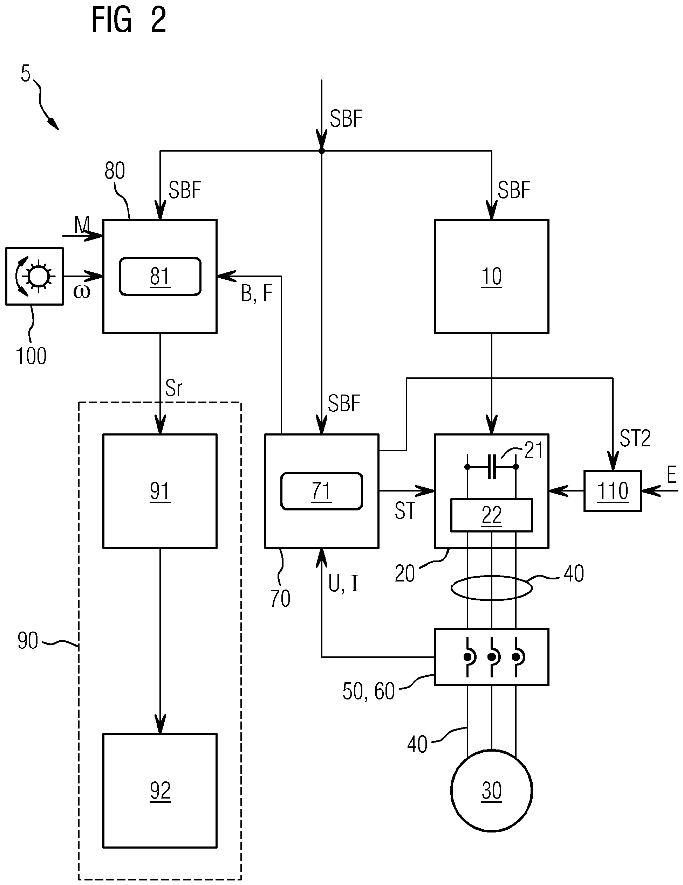

Die Figur 2 zeigt eine Variante des Ausführungsbeispiels gemäß Figur 1. Bei der Ausführungsvariante gemäß Figur 2 ist zwischen einer Energieversorgung E und dem Stromrichter 20 zusätzlich ein Schalter 110 angeordnet, der von der Überwachungseinrichtung 70 ansteuerbar ist. Die Überwachungseinrichtung 70 bzw. deren Recheneinrichtung 71 hat somit die Möglichkeit, die Versorgung des Stromrichters 20 mit Energie zu unterbinden und somit die antreibende Wirkung des Antriebsmotors 30 zu verhindern.

Eine Aktivierung bzw. ein Abschalten des Schalters 110 mittels eines Abschaltsignals ST2 erfolgt vorzugsweise dann, wenn bei Vorliegen eines Schnellbremsbefehls SBF die Recheneinrichtung 70 feststellt, dass der Antriebsmotor 30 nicht als elektrodynamische Bremse arbeitet, sondern weiterhin im Antriebsmodus. Bei dem Ausführungsbeispiel gemäß Figur 2 kann somit ein Abschalten des Antriebsmotors 30 sowohl durch das Abschaltsignal ST, das auf den Stromrichter 20 einwirkt, als auch zusätzlich durch das Abschaltsignal ST2, das auf den Schalter 110 einwirkt, bewirkt werden.

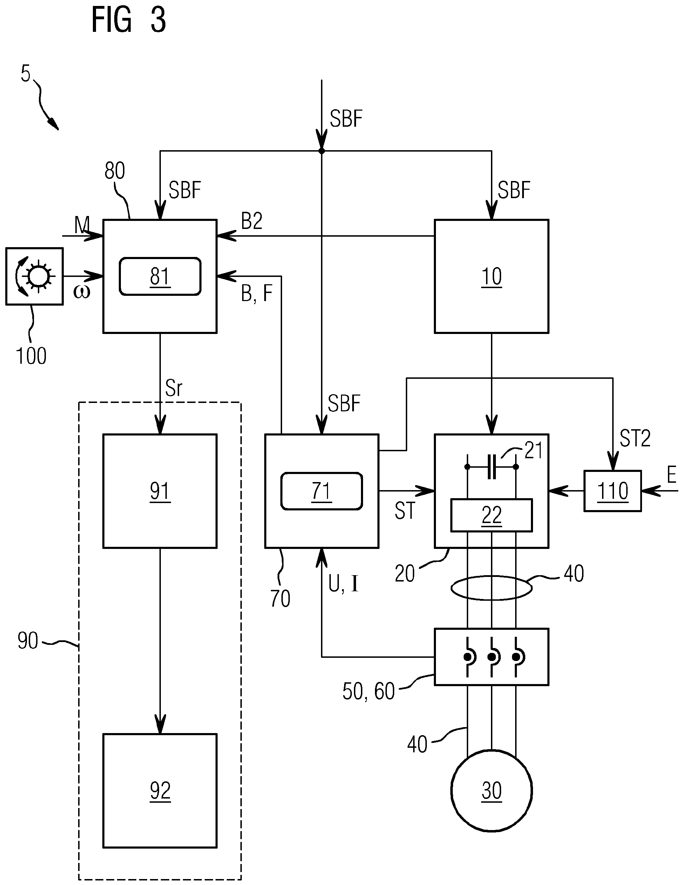

Die Figur 3 zeigt eine weitere Ausführungsvariante der Anordnung gemäß Figur 1. Bei der Ausführungsvariante gemäß Figur 3 steht die Antriebssteuereinrichtung 10 unmittelbar mit der Bremssteuereinrichtung 80 in Verbindung. Eine solche Verbindung ermöglicht es der Antriebssteuereinrichtung 10, eine die Bremswirkung des Antriebsmotors 30 bei Vorliegen des Schnellbremsbefehls SBF angebende Bremsangabe B2 an die Bremssteuereinrichtung 80 zu übermitteln. Die Bremssteuereinrichtung 80 hat somit die Möglichkeit, zusätzlich zu der Bremsangabe B der Überwachungseinrichtung 70 auch die Bremsangabe B2 der Antriebssteuereinrichtung 10 zu verarbeiten.

Stellt die Bremssteuereinrichtung 80 fest, dass die beiden Bremsangaben B und B2 voneinander über ein vorgegebenes Maß hinaus abweichen, so wird sie vorzugsweise die reibungsbasierte Bremse ohne Berücksichtigung der Bremsangaben B und B2 ansteuern, also beispielsweise so, als wäre der Antriebsmotor 30 bremsmäßig inaktiv.

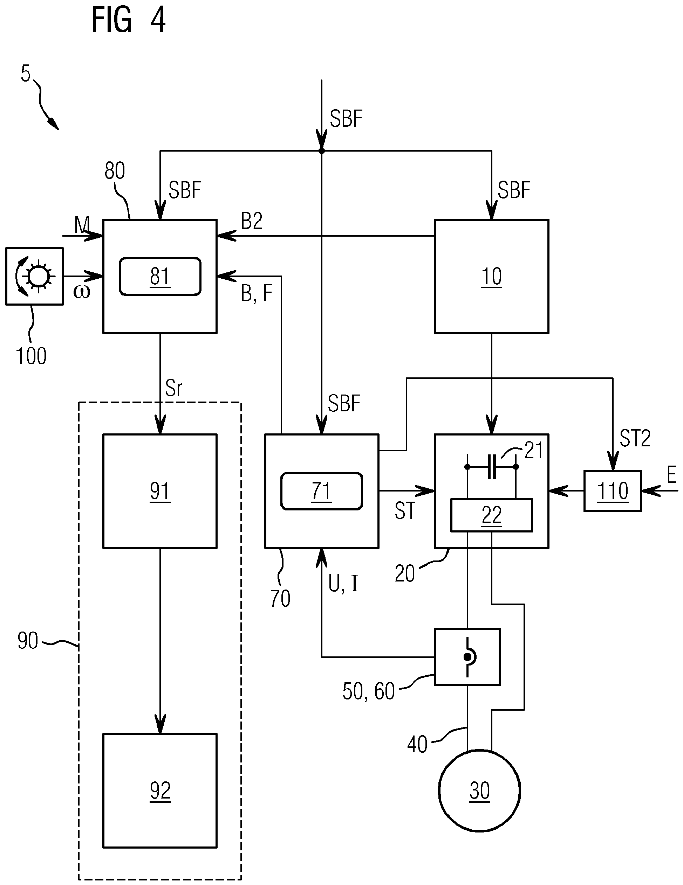

Die Figur 4 zeigt ein Ausführungsbeispiel für ein Schienenfahrzeug 5, bei dem der Antriebsmotor 30 einphasig ausgebildet ist. Demgemäß sind die Versorgungsleitungen 40 auch nur einphasig ausgelegt, und es sind nur ein Stromsensor 50 ein Spannungssensor 60 zur Bildung eines Strommesswerts I und eines Spannungsmesswerts U vorgesehen. Im Übrigen gelten die obigen Ausführungen im Zusammenhang mit den Figuren 1 bis 3 entsprechend.

Bei den Ausführungsbeispielen gemäß den Figuren 1 bis 4 sind die Überwachungseinrichtung 70 und die Bremssteuereinrichtung 80 in separaten Einheiten bzw. Geräten untergebracht; alternativ können sie auch gemeinsam eine einzige Einheit bilden oder in ein und derselben Einheit untergebracht sein. Beispielsweise können die Überwachungseinrichtung 70 und die Bremssteuereinrichtung 80 durch Softwaremodule gebildet werden, die von derselben Recheneinrichtung ausgeführt werden.

Bezugszeichenliste

| | |
|---|---|
| 5 | Schienenfahrzeug |
| 10 | Antriebssteuereinrichtung |
| 20 | Stromrichter |
| 21 | Gleichspannungszwischenkreis |
| 22 | Wechselrichter |
| 30 | Antriebsmotor |
| 40 | Versorgungsleitungen |
| 50 | Stromsensoren |
| 60 | Spannungssensoren |
| 70 | Überwachungseinrichtung |
| 71 | Recheneinrichtung |
| 80 | Bremssteuereinrichtung |
| 81 | Recheneinrichtung |
| 90 | Bremse |
| 91 | Steuereinheit |
| 92 | Bremsmechanik |
| 100 | Drehzahlsensor |
| 110 | Schalter |

| | |
|---|---|
| B | Bremsangabe |
| B2 | Bremsangabe |
| E | Energieversorgung |
| F | Fehlersignal |
| M | Lastsignal |
| I | Strommesswerte |
| SBF | Schnellbremsbefehl |
| Sr | Steuersignal |
| ST | Abschaltsignal |
| ST2 | Abschaltsignal |
| U | Spannungsmesswerte |
| w | Drehzahl |

**Patentansprüche**

1. Fahrzeug, insbesondere Schienenfahrzeug (5), mit zumindest einem Antriebsmotor (30) und einer Bremssteuereinrichtung (80),
   **dadurch gekennzeichnet, dass**
   eine Überwachungseinrichtung (70) des Fahrzeugs dazu ausgebildet ist, im Bremsbetrieb des Fahrzeugs zumindest einen durch den Antriebsmotor (30) fließenden Antriebsstrom und zumindest eine an dem Antriebsmotor (30) anliegende Antriebsspannung unter Bildung von Messwerten zu messen und anhand der Messwerte (U, I) eine die Arbeitsweise des Antriebsmotors (30) angebende Betriebsangabe, insbesondere eine die Bremswirkung des Antriebsmotors (30) angebende Bremsangabe (B), zu erzeugen.

**2.** Fahrzeug nach Anspruch 1,
**dadurch gekennzeichnet, dass**

das Fahrzeug eine reibungsbasierte Bremse (90) aufweist und die Bremssteuereinrichtung (80) zum Ansteuern der reibungsbasierten Bremse (90) geeignet ist,
wobei die Bremssteuereinrichtung (80) dazu ausgebildet ist, die reibungsbasierte Bremse (90) unter Berücksichtigung der Bremsangabe (B) der Überwachungseinrichtung (70) anzusteuern.

**3.** Fahrzeug nach einem der voranstehenden Ansprüche,
**dadurch gekennzeichnet, dass**
die Bremssteuereinrichtung (80) dazu ausgebildet ist, im Bremsbetrieb des Fahrzeugs die erforderliche Bremswirkung der reibungsbasierten Bremse (90) durch Differenzbildung zwischen einem vorgegebenen Sollbremswert und der Bremsangabe (B) der Überwachungseinrichtung (70) zu ermitteln und ein Steuersignal (Sr) für die reibungsbasierte Bremse (90) anhand der ermittelten erforderlichen Bremswirkung der reibungsbasierten Bremse (90) zu erzeugen.

**4.** Fahrzeug nach einem der voranstehenden Ansprüche,
**dadurch gekennzeichnet, dass**

der zumindest eine Antriebsmotor (30) ein zwei- oder mehrphasiger Antriebsmotor (30) ist und
die Überwachungseinrichtung (70) pro Phase einen Stromsensor zur Messung des durch den Antriebsmotor (30) fließenden Phasenstroms unter Bildung eines Strommesswerts und pro Phase einen Spannungssensor zur Messung einer an dem Antriebsmotor (30) anliegende Phasenspannung unter Bildung eines Spannungsmesswerts umfasst.

**5.** Fahrzeug nach Anspruch 4,
**dadurch gekennzeichnet, dass**

der zumindest eine Antriebsmotor (30) ein dreiphasiger Antriebsmotor (30) ist und
die Überwachungseinrichtung (70) drei Stromsensoren (50) zur Messung dreier Strommesswerte (I) und drei Spannungssensoren (60) zur Messung dreier Spannungsmesswerte (U) umfasst.

**6.** Fahrzeug nach einem der voranstehenden Ansprüche,
**dadurch gekennzeichnet, dass**
die Überwachungseinrichtung (70) die Strommesswerte unter Bildung einer Stromsumme und/oder die Spannungsmesswerte unter Bildung einer Spannungssumme aufsummiert.

**7.** Fahrzeug nach Anspruch 6,
**dadurch gekennzeichnet, dass**
die Überwachungseinrichtung (70) ein Fehlersignal (F) erzeugt, wenn der Betrag der Stromsumme einen strombezogenen Schwellwert und/oder der Betrag der Spannungssumme einen spannungsbezogenen Schwellwert überschreitet.

**8.** Fahrzeug nach den Ansprüchen 2 und 7,
**dadurch gekennzeichnet, dass**
die Bremssteuereinrichtung (80) dazu ausgebildet ist, im Bremsbetrieb des Fahrzeugs und Vorliegen des Fehlersignals (F) die reibungsbasierte Bremse (90) ohne Berücksichtigung der Bremsangabe (B) anzusteuern, also so, als wäre der Antriebsmotor (30) bremsmäßig inaktiv.

**9.** Fahrzeug nach einem der voranstehenden Ansprüche,
**dadurch gekennzeichnet, dass**
die Überwachungseinrichtung (70) dazu ausgebildet ist, im Bremsbetrieb, insbesondere bei Vorliegen eines Schnellbremsbefehls (SBF), den Antriebsstrom abzuschalten, wenn der durch den Antriebsmotor (30) fließende Antriebsstrom und die an dem Antriebsmotor (30) anliegende Antriebsspannung einen Antriebsbetrieb des Antriebs anzeigen.

**10.** Fahrzeug nach einem der voranstehenden Ansprüche,
**dadurch gekennzeichnet, dass**
das Fahrzeug eine Antriebssteuereinrichtung (10) und einen der Antriebssteuereinrichtung (10) nachgeordneten und von dieser angesteuerten Stromrichter (20) aufweist, der den Antriebsmotor (30) im Antriebsbetrieb mit Antriebsenergie versorgt und im Bremsbetrieb des Antriebsmotors (30) Bremsenergie aus dem Antriebsmotor (30) entnimmt.

**11.** Fahrzeug nach Anspruch 10,
**dadurch gekennzeichnet, dass**

zwischen einer Energieversorgung (E) und dem Stromrichter (20) ein Schalter (110) angeordnet ist, der im eingeschalteten Zustand die Energieversorgung (E) und den Stromrichter (20) verbindet und im ausgeschalteten Zustand voneinander trennt und
die Überwachungseinrichtung (70) den Schalter (110) ausschaltet, wenn im Bremsbetrieb des Fahrzeugs das Fehlersignal (F) vorliegt und/oder bei Vorliegen eines Schnellbremsbefehls (SBF) die Messwerte (U, I) einen aktiven Antriebsbetrieb des Antriebsmotors (30) anzeigen.

**12.** Fahrzeug nach einem der voranstehenden Ansprüche 2 bis 11,
**dadurch gekennzeichnet, dass**
die reibungsbasierte Bremse (90) eine elektropneumatische Bremse ist.

**13.** Fahrzeug nach einem der voranstehenden Ansprüche 2 bis 12,
**dadurch gekennzeichnet, dass**
die reibungsbasierte Bremse (90) stufenfrei ansteuerbar ist und/oder Bremskraft stufenfrei erzeugen kann.

**14.** Fahrzeug nach einem der voranstehenden Ansprüche,
**dadurch gekennzeichnet, dass**
die Bremssteuereinrichtung (80) mit der Antriebssteuereinrichtung (10) in Verbindung steht und eine von dieser ermittelte Bremsangabe (B2) zusätzlich zur Bremsangabe (B) der Überwachungseinrichtung (70) verarbeitet.

**15.** Verfahren zum Bremsen eines Fahrzeugs, insbesondere Schienenfahrzeugs (5), das zumindest einen Antriebsmotor (30) und zumindest eine Bremssteuereinrichtung (80) aufweist,
**dadurch gekennzeichnet, dass**
im Bremsbetrieb des Fahrzeugs zumindest ein durch den Antriebsmotor (30) fließender Antriebsstrom und zumindest eine an dem Antriebsmotor (30) anliegende Antriebsspannung unter Bildung von Messwerten gemessen werden und anhand der Messwerte (U, I) eine die Arbeitsweise des Antriebsmotors (30) angebende Betriebsangabe, insbesondere eine die Bremswirkung des Antriebsmotors (30) angebende Bremsangabe (B), erzeugt wird.

**Claims**

**1.** Vehicle, in particular a rail vehicle (5), with at least one drive motor (30) and one brake control device (80),
**characterised in that**
a monitoring device (70) of the vehicle is designed to measure, in the braking mode of the vehicle, at least one drive current flowing through the drive motor (30), and at least one drive voltage applied to the drive motor (30), to form measurement values, and to generate operational information specifying the mode of operation of the drive motor (30), in particular braking information (B) specifying the braking effect of the drive motor (30), on the basis of the measurement values (U, I).

**2.** Vehicle according to claim 1,
**characterised in that**

the vehicle has a friction-based brake (90) and the brake control device (80) is suitable for actuating the friction-based brake (90),
wherein the brake control device (80) is designed to actuate the friction-based brake (90) by taking into account the braking information (B) of the monitoring device (70).

**3.** Vehicle according to one of the preceding claims,
**characterised in that**
the brake control device (80) is designed, in the braking mode of the vehicle, to determine the required braking effect of the friction-based brake (90) by calculating the difference between a predefined desired braking value and the braking information (B) of the monitoring device (70) and to generate a control signal (Sr) for the friction-based brake (90) on the basis of the determined required braking effect of the friction-based brake (90).

4. Vehicle according to one of the preceding claims,
   **characterised in that**

   the at least one drive motor (30) is a two-or multi-phase drive motor (30) and
   the monitoring device (70) comprises per phase a current sensor for measurement of the phase current flowing through the drive motor (30) to form a current measurement value, and per phase a voltage sensor for measurement of a phase voltage applied to the drive motor (30) to form a voltage measurement value.

5. Vehicle according to claim 4,
   **characterised in that**

   the at least one drive motor (30) is a three-phase drive motor (30) and
   the monitoring device (70) comprises three current sensors (50) for measurement of three current measurement values (I) and three voltage sensors (60) for measurement of three voltage measurement values (U).

6. Vehicle according to one of the preceding claims,
   **characterised in that**
   the monitoring device (70) adds up the current measurement values to form a current sum and/or the voltage measurement values to form a voltage sum.

7. Vehicle according to claim 6,
   **characterised in that**
   the monitoring device (70) generates a fault signal (F) when the value of the current sum exceeds a current-based threshold value and/or the value of the voltage sum exceeds a voltage-based threshold value.

8. Vehicle according to claims 2 and 7,
   **characterised in that**
   the brake control device (80) is designed, in the braking mode of the vehicle and in the presence of the fault signal (F), to actuate the friction-based brake (90) without taking into account the braking information (B), in other words as if the drive motor (30) were inactive in terms of braking.

9. Vehicle according to one of the preceding claims,
   **characterised in that**
   the monitoring device (70) is designed, in the braking mode, in particular in the presence of an emergency brake command (SBF), to switch off the drive current if the drive current flowing through the drive motor (30) and the drive voltage applied to the drive motor (30) indicate a driving mode of the drive.

10. Vehicle according to one of the preceding claims,
    **characterised in that**
    the vehicle has a drive control device (10) and a power converter (20) connected downstream of the drive control device (10) and actuated by it, which, in the driving mode, supplies the drive motor (30) with driving energy and, in the braking mode of the drive motor (30), removes braking energy from the drive motor (30).

11. Vehicle according to claim 10,
    **characterised in** that

    a switch (110) is arranged between an energy supply (E) and the power converter (20), which in the switched-on state connects the energy supply (E) and the power converter (20) and separates them from each other in the switched-off state and
    the monitoring device (70) switches off the switch (110) if, in the braking mode of the vehicle, the fault signal (F) is present and/or, in the presence of an emergency brake command (SBF), the measurement values (U, I) indicate an active driving mode of the drive motor (30).

12. Vehicle according to one of the preceding claims 2 to 11,
    **characterised in that**

the friction-based brake (90) is an electropneumatic brake.

13. Vehicle according to one of the preceding claims 2 to 12,
    **characterised in that**
    the friction-based brake (90) can be actuated continuously and/or can generate braking force continuously.

14. Vehicle according to one of the preceding claims,
    **characterised in that**
    the brake control device (80) is connected to the drive control device (10) and processes braking information (B2) determined by it in addition to the braking information (B) of the monitoring device (70).

15. Method for braking a vehicle, in particular a rail vehicle (5), which has at least one drive motor (30) and at least one braking control device (80),
    **characterised in that**
    in the braking mode of the vehicle, at least one drive current flowing through the drive motor (30) and at least one drive voltage applied to the drive motor (30) are measured to form measurement values, and operational information specifying the mode of operation of the drive motor (30), in particular braking information (B) specifying the braking effect of the drive motor (30), is generated on the basis of the measurement values (U, I).

**Revendications**

1. Véhicule, en particulier véhicule (5) ferroviaire, comprenant au moins un moteur (30) d'entraînement et un dispositif (80) de commande de frein,
    **caractérisé en ce qu'**
    un dispositif (70) de contrôle du véhicule est constitué pour mesurer, dans le fonctionnement en freinage du véhicule, au moins un courant d'entraînement passant dans le moteur (30) d'entraînement et au moins une tension d'entraînement s'appliquant au moteur (30) d'entraînement avec formation de valeurs de mesure et pour produire, à l'aide des valeurs (U, I) de mesure, une indication de fonctionnement indiquant le mode de travail du moteur (30) d'entraînement, en particulier une indication (B) de freinage indiquant l'effet de freinage du moteur (30) d'entraînement.

2. Véhicule suivant la revendication 1,
    **caractérisé en ce que**

    le véhicule a un frein (90) reposant sur la friction et le dispositif (80) de commande de freinage est propre à commander le frein (90) reposant sur la friction,
    dans lequel le dispositif (80) de commande de freinage est constitué pour commander le frein (90) reposant sur la friction en tenant compte de l'indication (B) de freinage du dispositif (70) de contrôle.

3. Véhicule suivant l'une des revendications précédentes,
    **caractérisé en ce que**
    le dispositif (80) de commande de freinage est constitué pour déterminer, en fonctionnement de freinage du véhicule, l'effet de freinage nécessaire du frein (90) reposant sur la friction par formation d'une différence entre une valeur de freinage de consigne donnée à l'avance et l'indication (B) de freinage du dispositif (70) de contrôle et pour produire un signal (Sr) de commande du frein (90) reposant sur la friction, à l'aide de l'effet de freinage nécessaire déterminé du frein (90) reposant sur la friction.

4. Véhicule suivant l'une des revendications précédentes,
    **caractérisé en ce que**

    le au moins un moteur (30) d'entraînement est un moteur (30) d'entraînement biphasé ou polyphasé, et
    le dispositif (70) de contrôle comprend, par phase, un capteur de courant pour la mesure du courant de phase passant dans le moteur (30) d'entraînement avec formation d'une valeur de mesure du courant, et par phase, un capteur de tension pour la mesure d'une tension de phase s'appliquant au moteur (30) d'entraînement avec formation d'une valeur de mesure de la tension.

5. Véhicule suivant la revendication 4,
    **caractérisé en ce que**

le au moins un moteur (30) d'entraînement est un moteur (30) d'entraînement triphasé, et
le dispositif (70) de contrôle comprend trois capteurs (50) de courant pour la mesure de trois valeurs (I) de mesure du courant et trois capteurs (60) de tension pour la mesure de trois valeurs (U) de mesure de la tension.

6. Véhicule suivant l'une des revendications précédentes,
**caractérisé en ce que**
le dispositif (70) de contrôle somme les valeurs de mesure du courant avec formation d'une somme de courant, et/ou les valeurs de mesure de la tension avec formation d'une somme de tension.

7. Véhicule suivant la revendication 6,
**caractérisé en ce que**
le dispositif (70) de contrôle produit un signal (F) de défaut, lorsque la valeur absolue de la somme de courant dépasse une valeur de seuil rapportée au courant, et/ou lorsque la valeur absolue de la somme de tension dépasse une valeur de seuil rapportée à la tension.

8. Véhicule suivant les revendications 2 et 7,
**caractérisé en ce que**
le dispositif (80) de commande de freinage est constitué pour commander, en fonctionnement de freinage du véhicule et en présence du signal (F) de défaut, le frein (90) reposant sur la friction sans prendre en compte l'indication (B) de freinage, donc comme si, du point de vue du freinage, le moteur (30) d'entraînement était inactif.

9. Véhicule suivant l'une des revendications précédentes,
**caractérisé en ce que**
le dispositif (70) de contrôle est constitué pour, en fonctionnement en freinage, en particulier en présence d'une instruction (SBF) de freinage rapide, interrompre le courant d'entraînement, si le courant d'entraînement passant dans le moteur (30) d'entraînement et la tension d'entraînement s'appliquant au moteur (30) d'entraînement indiquent un fonctionnement en entraînement de l'entraînement.

10. Véhicule suivant l'une des revendications précédentes,
**caractérisé en ce que**
le véhicule a un dispositif (10) de commande de l'entraînement et un convertisseur (20) monté en aval du dispositif (10) de commande de l'entraînement et commandé par celui-ci, qui alimente en énergie d'entraînement le moteur (30) d'entraînement dans le fonctionnement en entraînement et qui prélève de l'énergie de freinage du moteur (30) d'entraînement, lorsque le moteur (30) d'entraînement fonctionne en frein.

11. Véhicule suivant la revendication 10,
**caractérisé en ce qu'**

entre une alimentation (E) en énergie et le convertisseur (20) est monté un interrupteur (110), qui relie dans l'état fermé l'alimentation (E) en énergie et le convertisseur (20), et qui les sépare l'un de l'autre dans l'état ouvert, et
le dispositif (70) de contrôle ouvre l'interrupteur (110) si, lorsque le véhicule fonctionne en frein, il y a le signal (F) de défaut et/ou si, en présence d'une instruction (SBF) de freinage rapide, les valeurs (U, I) de mesure indiquent un fonctionnement actif en entraînement du moteur (30) d'entraînement.

12. Véhicule suivant l'une des revendications 2 à 11 précédentes,
**caractérisé en ce que**
le frein (90) reposant sur la friction est un frein électropneumatique.

13. Véhicule suivant l'une des revendications 2 à 12 précédentes,
**caractérisé en ce que**
le frein (90) reposant sur la friction peut être commandé en continu et/ou peut produire la force de freinage en continu.

14. Véhicule suivant l'une des revendications précédentes,
**caractérisé en ce que**
le dispositif (80) de commande de frein est en liaison avec le dispositif (10) de commande de l'entraînement et traite une indication (B2) de freinage déterminée par celui-ci supplémentairement à l'indication (B) de freinage du dispositif (70) de contrôle.

**15.** Procédé de freinage d'un véhicule, en particulier d'un véhicule (5) ferroviaire, qui a au moins un moteur (30) d'entraînement et au moins un dispositif (80) de commande de frein,
**caractérisé en ce que**,
lorsque le véhicule est en fonctionnement de freinage, on mesure au moins un courant d'entraînement passant dans le moteur (30) d'entraînement et au moins une tension d'entraînement s'appliquant au moteur (30) d'entraînement avec formation de valeurs de mesure et on produit, à l'aide des valeurs (U, I) de mesure, une indication de fonctionnement indiquant le mode de travail du moteur (30) d'entraînement, en particulier une indication (B) de freinage indiquant l'effet de freinage du moteur (30) d'entraînement.

# FIG 1

# FIG 2

# FIG 3

# FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016134964 A1
- DE 102014217431 A1
- WO 2017093224 A1